# EUROPEAN PATENT APPLICATION

(11) **EP 4 258 431 A1**
(43) Date of publication of application: **11.10.2023**
(21) Application number: 22207806.5
(22) Date of filing: 16.11.2022
(51) Int. Cl.: H01M 50/103, H01M 50/533, H01M 50/536, H01M 50/538, H01M 50/562, H01M 50/474, H01M 50/486, H01M 10/04, H01M 50/534

(54) **CURRENT COLLECTING MEMBER, CELL AND ELECTRONIC DEVICE**

(30) Priority: 07.04.2022 CN 202220801234 U
(71) Applicant: AESC Japan Ltd., Kanagawa, 2520012 (JP)
(72) Inventor: CHE, Peipei, Jiangyin City, Wuxi City, 214443 (CN)
(74) Representative: Becker, Eberhard

(57) **Abstract**

The invention belongs to the technical field of secondary batteries, and discloses a current collecting member, a cell and an electronic device. The current collecting member includes a main body structure and a lead-out structure. The main body structure is further provided with a protection member, at least one end of the protection member is bent along the width direction of the main body structure and wraps the corner portion of the main body structure in the thickness direction. The current collecting member of the invention protects one side of the main body structure of the current collecting member close to the electrode assembly and the corner portion of the main body structure through the protection member, thereby effectively protecting the tabs.

## Description

### BACKGROUND

### Technical Field

The disclosure relates to the technical field of secondary batteries, in particular to a current collecting member, a cell and an electronic device.

### Description of Related Art

With the increasing development of electric vehicles, there are higher requirements for the performance of lithium-ion batteries that provide energy for electric vehicles. In terms of battery, electrode assembly needs to output the current uniformly through the current collecting member. When a tab portion is connected to the current collecting member, the surface of the current collecting member, especially the edge and corner of the current collecting member, will cause the tab to be worn, and it is very likely to cause damage to the tab and affect the service life of battery.

### SUMMARY

The purpose of the present disclosure is to provide a current collecting member, a cell and an electronic device to solve the problem of wear occurred between the tab portion and the current collecting member.

To achieve this purpose, the disclosure adopts the following technical solutions:
In a first aspect, a current collecting member is provided, which includes a main body structure and a lead-out structure. The main body structure is further provided with a protection member, at least one end of the protection member is bent along the width direction of the main body structure and wraps the corner portion of the main body structure in the thickness direction. In a third aspect, an electronic device is provided, which includes the above-mentioned cell.

The advantageous effects of the present disclosure are as follows:
The overall structure of the current collecting member of the disclosure is simple, so as to reduce the wear between the tab portion and the main body structure, thereby effectively protecting the tab portion.

### BRIEF DESCRIPTION OF THE DRAWINGS

FIG. 1 is a schematic structural view of a current collecting member described in an embodiment of the present disclosure.
FIG. 2 is a schematic view of partial enlargement of position A in FIG. 1.
FIG. 3 is a front view of the current collecting member in an embodiment of the present disclosure.
FIG. 4 is a side view of the current collecting member in an embodiment of the present disclosure.
FIG. 5 is a schematic structural view of a current collecting member (without a protection member) in an embodiment of the present disclosure.
FIG. 6 is a schematic view of partial enlargement of position B in FIG. 5.
FIG. 7 is a schematic view of the disassembly of the structure of the cell in an embodiment of the present disclosure.
FIG. 8 is a front view of the structure of the cell in an embodiment of the present disclosure.
FIG. 9 is a cross-sectional view of direction A-A in FIG. 8.
FIG. 10 is a schematic view of partial enlargement of position C in FIG. 9.

### DESCRIPTION OF THE EMBODIMENTS

Embodiments of the present disclosure are described in detail below, examples of which are illustrated in the accompanying drawings, the same or similar reference numerals refer to the same or similar parts or parts having the same or similar functions throughout. The embodiments described below with reference to the accompanying drawings are exemplary, and are intended to be used to explain the present disclosure, but should not be construed as a limitation to the present disclosure.

In the description of the present disclosure, unless otherwise explicitly specified and limited, the terms "connected", "linked" and "fixed" should be understood in a broad sense, for example, the connection may be a fixed connection, a detachable connection, a mechanical connection, an electrical connection, a direct connection, an indirect connection through an intermediate medium, or may be an internal connection between two elements or an interaction relationship between two elements. For those of ordinary skill in the art, the specific meanings of the above terms in the present disclosure can be understood according to specific situations.

In the description of the present disclosure, unless otherwise explicitly specified and limited, the first feature "on" or "under" the second feature may include direct contact between the first feature and the second feature, or may include indirect contact through an additional feature between the first feature and the second feature instead of direct contact between them. Also, the first feature being "above", "over" and "on top of' the second feature includes the first feature being directly above and obliquely above the second feature, or simply means that the first feature is at a higher level than the second feature. The first feature being "below", "under" and "beneath" the second feature includes the first feature being directly below and obliquely below the second feature, or simply means that the first feature is at a lower level than the second feature.

In the description of this embodiment, the terms "upper", "lower", "right", etc. are based on the orientation or positional relationship shown in the accompanying drawings, which are only for convenience of description and simplified operation, rather than indicating or imply that the referred device or element must have a specific orientation, be constructed and operate in a specific orientation, and therefore should not be construed as a limitation to the present disclosure. In addition, the terms "first" and "second" are only used for distinction in description, and have no special meaning.

The electronic device of the present disclosure is not particularly limited, and it can be used in any electronic apparatus known in the related art. In some embodiments, electronic devices may include, but are not limited to, notebook computers, pen input computers, mobile computers, e-book players, portable telephones, portable fax machines, portable copiers, portable printers, headsets, VCRs, LCD TVs, portable cleaners, portable CD players, mini discs, transceivers, electronic notepads, calculators, memory cards, portable recorders, radios, backup power supplies, motors, automobiles, motorcycles, assisted bicycles, bicycles, lighting equipment, toys, game consoles, clocks, power tools, flashlights, cameras, large-scale household storage batteries and lithium-ion capacitors, etc.

The technical solutions of the present disclosure will be further described below with reference to the accompanying drawings and through specific embodiments.

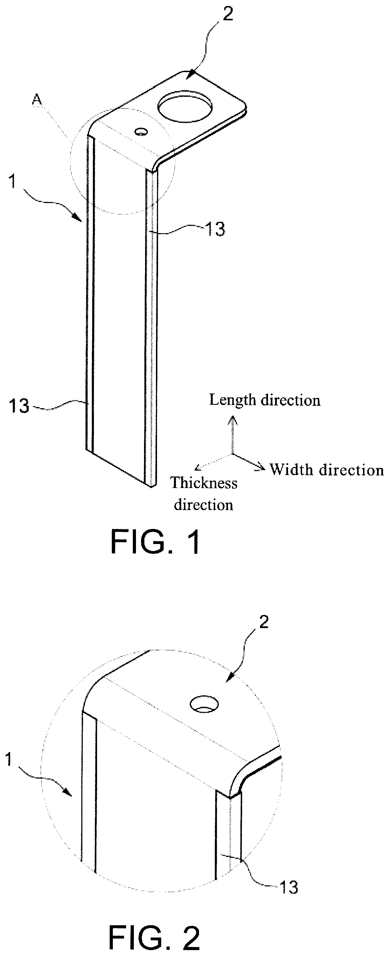

As shown in FIG. 1 to FIG. 6, the present disclosure provides a current collecting member, which includes a main body structure 1 and a lead-out structure 2 for drawing out current. The main body structure 1 is arranged at one end of the electrode assembly 100, and the main body structure 1 is parallel or substantially parallel to a lateral surface 105 of the electrode assembly, and extends along the width direction of the electrode assembly 100. The main body structure 1 and the lead-out structure 2 are integrally formed, and the main body structure 1 is bent relative to the lead-out structure 2 in a direction away from the cover plate assembly 102. The tab portion 101 is bent toward one side of the main body structure 1 away from the electrode assembly 100 along one end of the main body structure 1 in the width direction and is connected with the main body structure 1. The main body structure 1 is further provided with a protection member 13. The material of the protection member 13 includes at least one of polypropylene, ethylene phthalate or polyimide. The protection member 13 covers one side of the main body structure 1 close to the electrode assembly 100, and is bent along one end of the main body structure 1 in the width direction and wraps the corner portion of the main body structure 1 in the thickness direction.

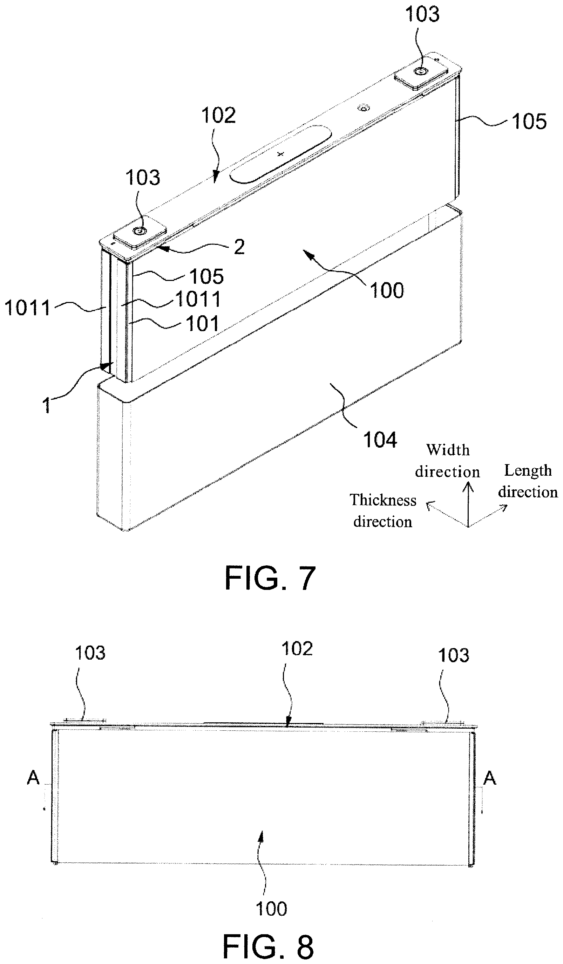

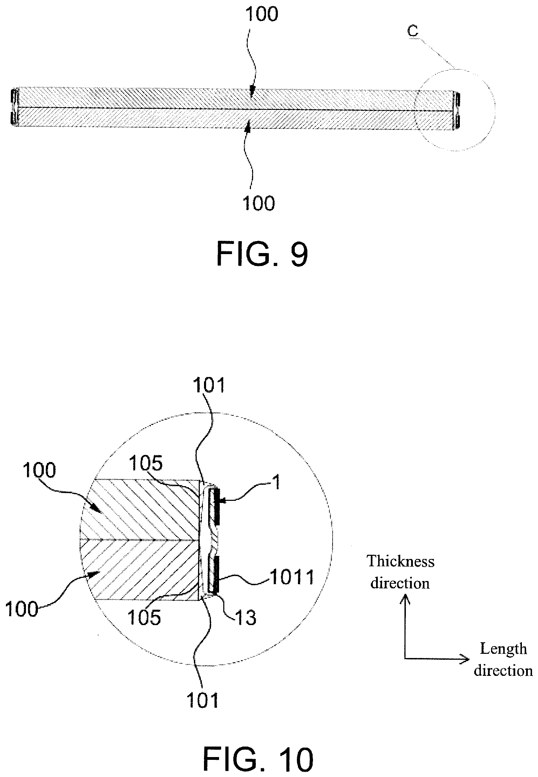

In this embodiment, the structure of the current collecting member is shown in FIG. 1, and the directions indicated by the arrows in FIG. 1 are the length, width, and thickness directions of the main body structure 1. For a schematic diagram of the connection between the current collecting member and the electrode assembly 100, please refer to FIG. 7. The electrode assembly 100 is an oblong rectangular cell, and the directions indicated by the arrows in FIG. 7 are the length, width, and thickness directions of the electrode assembly 100. The main body structure 1 of the current collecting member is disposed at one end of the electrode assembly 100 in the length direction, parallel or substantially parallel to the lateral surface 105 of the electrode assembly. The lead-out structure 2 is connected with the cover plate assembly 102, and the main body structure 1 is bent relative to the lead-out structure 2 in a direction away from the cover plate assembly 102 and extends along the width direction of the electrode assembly 100. The tab portion 101 led out from the electrode assembly 100 is bent around one side of the main body structure 1 in the width direction and connected to one side of the main body structure 1 away from the electrode assembly 100. It can be understood that, as shown in FIG. 1 to FIG. 3, with reference to FIG. 10, the directions indicated by the arrows in FIG. 10 are the length and thickness directions of the electrode assembly 100 respectively. The thickness direction of the main body structure 1 is in the same direction as the length direction of the electrode assembly 100. When the tab portion 101 is connected to the main body structure 1, one side of the main body structure 1 close to the electrode assembly 100 and the corner portion of the main body structure 1 in the thickness direction will cause wear to part of the tab portion 101. In order to protect the tab portion 101 from being worn and damaged in the long run, a protection member 13 is provided on one side of the main body structure 1 close to the electrode assembly 100 and the corner portion of the main body structure 1 in the thickness direction. In this manner, it is possible to reduce the wear between the tab portion 101 and the main body structure 1, and the tabs are effectively protected. The protection member 13 may be a back adhesive layer or a polyester-based substance.

Optionally, at least part of the outer edge at one side of the main body structure 1 away from the electrode assembly 100 is provided with an accommodating groove 12, and the accommodating groove 12 extends along the length direction of the main body structure 1. The ratio of the depth of the accommodating groove 12 to the thickness of the main body structure 1 is in the range of 1/10 to 2/3.

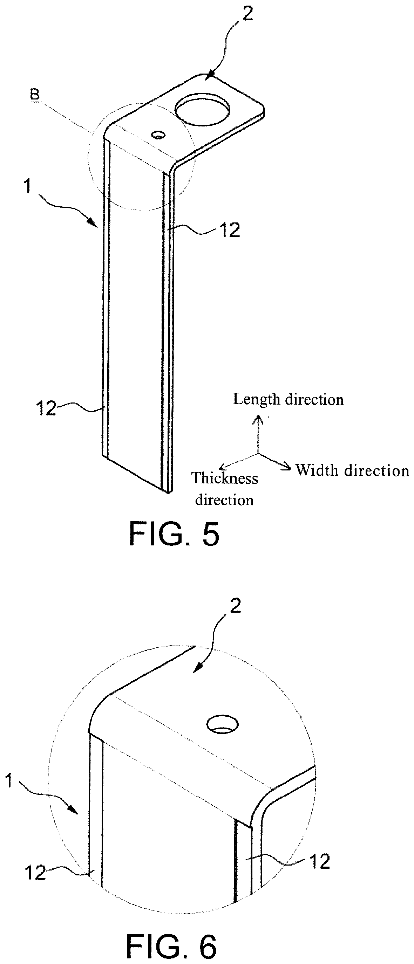

As shown in FIG. 5 and FIG. 6, an accommodating groove 12 may be provided at least partially at the outer edge in the length direction at one side of the main body structure 1 away from the electrode assembly 100. The accommodating groove 12 may partially reduce the thickness of the edge of the main body structure 1 and reduce the amount of materials used. In the meantime, when the tab portion 101 is bent around the main body structure 1, the total thickness of the bent portion of the tab portion 101 and the main body structure 1 may be reduced. Referring to FIG. 10, when the tab portion 101 is bent around the main body structure 1, since the outer edge in the length direction at one side of the main body structure 1 away from the electrode assembly 100 is provided with an accommodating groove 12 (not shown in FIG. 10), the bending portion of the tab portion 101 along the thickness direction of the main body structure 1 and the total thickness of the main body structure 1 are reduced, so as to improve the energy density of the electrode assembly 100. In some embodiments, the ratio of the depth of the accommodating groove 12 to the thickness of the main body structure 1 may be, but is not limited to, within a range formed by any two of 0.1, 0.2, 0.5 or 2/3. If the depth of the accommodating groove 12 is too deep, both ends of the main body structure 1 in the width direction will become thinner, which will affect the structural strength of the main body structure 1. If the depth of the accommodating groove 12 is too small, the bending part of the tab portion 101 along the thickness direction of the main body structure 1 and the overall thickness of the main body structure 1 will be too large.

Optionally, the protection member 13 at least partially covers the accommodating groove 12. It can be understood that the protection member 13 serves the function of protecting the tab portion 101 and reducing the wear between the tab portion 101 and the main body structure 1. The protection member 13 has a certain thickness, and the groove depth of the accommodating groove 12 is greater than or equal to the thickness of the protection member 13. In this manner, after the protection member 13 covers the accommodating groove 12, the protection member 13 will not protrude from the surface of the main body structure 1 and affect the overall size of the current collecting member in the thickness direction.

Optionally, a protection member 1011 is sleeved on the tab portion 101, and one side of the protection member 1011 is attached to one side of the main body structure 1 away from the electrode assembly 100.

As shown in FIG. 7 and FIG. 10, the protection member 1011 is sleeved on the tab portion 101, the protection member 1011 protects the tab portion 101, and the protection member 1011 is welded and connected to one side of the main body structure 1 away from the electrode assembly 100. The tab portion 101 is not directly welded with the main body structure 1 to prevent the tab portion 101 from being damaged.

Optionally, the electrode assembly 100 is provided with two sets. The tab portion 101 of one set of electrode assemblies 100 is led out in a direction away from the other set of electrode assemblies 100. The tab portions 101 of the two sets of electrode assemblies 100 are bent respectively around both ends of the main body structure 1 in the width direction.

As shown in FIG. 9 and FIG. 10, the main body structure 1 in this embodiment is correspondingly connected to the tab portions 101 of the two sets of electrode assemblies 100. The tab portions 101 of the two sets of electrode assemblies 100 are bent respectively around both ends of the main body structure 1 in the width direction. FIG. 10 of this embodiment shows the connection between the two sets of electrode assemblies 100 and the main body structure 1. The protection member 13 covers one side of the main body structure 1 close to the electrode assembly 100, and is bent along both ends of the main body structure 1 in the width direction and wraps two corner portions in the thickness direction. The two tab portions 101 at the same end of the two sets of electrode assemblies 100 are connected and output through one current collecting member, which reduces the number of current collecting members, improves the energy density of the electrode assembly 100 and reduces the production cost. In other embodiments, the electrode assemblies 100 may be arranged in a set, and the protection member 13 covers one side of the main body structure 1 close to the electrode assembly 100 and the corner portion of the main body structure 1 on one side where the tab portion 101 is bent, which is not limited to the illustration in FIG. 10.

Optionally, the main body structure 1 is further provided with a reinforcing rib 11, and the reinforcing rib 11 extends along the length direction of the main body structure 1.

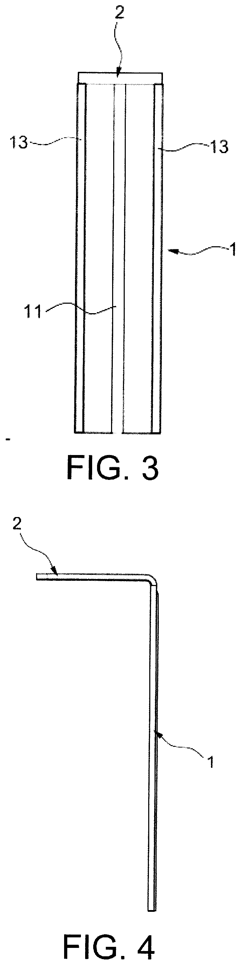

As shown in FIG. 3, the main body structure 1 is provided with a reinforcing rib 11 in the length direction. The reinforcing rib 11 is arranged on one side of the main body structure 1 away from the electrode assembly 100. The reinforcing rib 11 facilitates to improve the structural strength of the main body structure 1, and the shape of the reinforcing rib 11 may also be a straight line, a wavy line, or other shapes and structures, etc., and is not limited to the shape shown in FIG. 3 of this embodiment.

This embodiment further provides a cell, which includes an electrode assembly 100, a cover plate assembly 102 and the current collecting member. The electrode assembly 100 includes a tab portion 101 led out from a lateral surface 105 of the electrode assembly 100, and the cover plate assembly 102 is located on the top surface of the electrode assembly 102. The cover plate assembly 102 includes a pole 103. The lead-out structure 2 is located on the top surface of the electrode assembly 100 and is connected to the pole 103, and the tab portion 101 is connected to the main body structure 1.

As shown in FIG. 7 to FIG. 10, the main body structure 1 of the current collecting member is parallel to the lateral surface 105 of the electrode assembly 100. The lead-out structure 2 is located on the top surface of the electrode assembly 100 and is connected to the pole 103. One side of the main body structure 1 close to the electrode assembly 100 and the corner portions of the main body structure 1 in the thickness direction are both provided with protection members 13 (as shown in FIG. 10). The tab portion 101 is bent along one end of the main body structure 1 in the width direction and connected to one side of the main body structure 1 away from the electrode assembly 100. The wear between the current collecting member of the cell and the tab portion 101 is small, and the performance and service life of the cell are significantly improved.

Optionally, the cell further includes a housing 104, the housing 104 is sheathed outside the two sets of electrode assemblies 100 and is fixedly connected to the cover plate assembly 102. As shown in FIG. 7, the above-mentioned cell further includes a housing 104, and the housing 104 is connected to the cover plate assembly 102 after sheathing the electrode assembly 100 to package and protect the electrode assembly 100 and other components.

This embodiment further provides an electronic device including a plurality of the above-mentioned cells. The electronic device has good performance, less wear between the tab portion 101 and the current collecting member, and has a long service life.

Optionally, at least part of the outer edge of the main body structure is provided with an accommodating groove. The ratio of the depth of the accommodating groove to the thickness of the main body structure is in the range of 1/10 to 2/3, and the length direction of the accommodating groove is parallel to the length direction of the main body structure.

Optionally, the protection member at least partially covers one end of the accommodating groove close to the main body structure in the width direction.

Optionally, the thickness of the protection member is less than or equal to the depth of the accommodating groove.

Optionally, the main body structure and the lead-out structure are integrally formed.

Optionally, a reinforcing rib is further provided on the main body structure, and the reinforcing rib extends along the length direction of the main body structure.

Optionally, the material of the protection member includes at least one of polypropylene, polyethylene terephthalate or polyimide.

In a second aspect, a cell is provided, which includes an electrode assembly, a cover plate assembly and the above-mentioned current collecting member. The cover plate assembly is located on the top surface of the electrode assembly, the cover plate assembly includes a pole. The lead-out structure is located on the top surface of the electrode assembly and connected with the pole.

Optionally, the main body structure is disposed at one end of the electrode assembly in the length direction. One end of the electrode assembly is provided with a tab portion, and the tab portion is bent toward one side of the main body structure away from the electrode assembly along one end of the main body structure in the width direction and is connected with the main body structure.

Optionally, the electrode assembly is provided in two sets. The tab portion of one set of the electrode assemblies is led out in a direction away from the other set of the electrode assemblies. The tab portions of the two sets of the electrode assemblies are bent respectively around both ends of the main body structure in the width direction.

Optionally, the main body structure is parallel or substantially parallel to the lateral surface of the electrode assembly, and extends along the width direction of the electrode assembly. The main body structure is disposed vertically or substantially vertically relative to the lead-out structure in a direction away from the cover plate assembly.

Optionally, the cell further includes a housing, which is sheathed outside the electrode assembly and is fixedly connected to the cover plate assembly.

Optionally, at least one side of the tab portion is provided with a protection member, and one side of the protection member is attached to one side of the main body structure away from the electrode assembly.

## Claims

1. A current collecting member, comprising:
a main body structure (1) and a lead-out structure (2), wherein
the main body structure (1) is further provided with a protection member (13), at least one end of the protection member (13) is bent along a width direction of the main body structure (1) and wraps a corner portion of the main body structure (1) in a thickness direction.

2. The current collecting member according to claim 1, wherein at least a part of an outer edge of the main body structure (1) is provided with an accommodating groove (12), a ratio of a depth of the accommodating groove (12) to a thickness of the main body structure (1) is in a range of 1/10 to 2/3, and a length direction of the accommodating groove (12) is parallel to a length direction of the main body structure (1).

3. The current collecting member according to claim 1 or 2, wherein the protection member (13) at least partially covers one end of the accommodating groove (12) close to the main body structure (1) in the width direction.

4. The current collecting member according to any one of claims 1-3, wherein a thickness of the protection member (13) is less than or equal to the depth of the accommodating groove (12).

5. The current collecting member according to any one of claims 1-4, wherein the main body structure (1) and the lead-out structure (2) are integrally formed.

6. The current collecting member according to any one of claims 1-5, wherein a reinforcing rib (11) is further provided on the main body structure (1), and the reinforcing rib (11) extends along a length direction of the main body structure (1).

7. The current collecting member according to any one of claims 1-6, wherein a material of the protection member (13) comprises at least one of polypropylene, polyethylene terephthalate or polyimide.

8. A cell, comprising an electrode assembly (100), a cover plate assembly (102) and a current collecting member as claimed in any one of claims 1-7, wherein the cover plate assembly (102) is located on a top surface of the electrode assembly (100), the cover plate assembly (102) comprises a pole (103), and the lead-out structure (2) is located on the top surface of the electrode assembly (100) and connected with the pole (103).

9. The cell according to claim 8, wherein the main body structure (1) is disposed at one end of the electrode assembly (100) in a length direction, the one end of the electrode assembly (100) in a length direction is provided with a tab portion (101), and the tab portion (101) is bent toward one side of the main body structure (1) away from the electrode assembly (100) along one end of the main body structure (1) in the width direction and is connected with the main body structure (1).

10. The cell according to claim 8 or 9, wherein the electrode assembly (100) is provided in two sets, the tab portion (101) of the one set of the electrode assemblies (100) is led out in a direction away from the other set of the electrode assemblies (100), the tab portions (101) of the two sets of the electrode assemblies (100) are bent respectively around both ends of the main body structure (1) in the width direction.

11. The cell according to any one of claims 8-10, wherein the main body structure (1) is parallel or substantially parallel to a lateral surface (105) of the electrode assembly (100), and extends along a width direction of the electrode assembly (100), and the main body structure (1) is disposed vertically or substantially vertically relative to the lead-out structure (2) in a direction away from the cover plate assembly (102).

12. The cell according to any one of claims 8-11, wherein the cell further comprises a housing (104), which is sheathed outside the electrode assembly (100) and is fixedly connected to the cover plate assembly (102).

13. The cell according to any one of claims 8-12, wherein at least one side of the tab portion (101) is provided with the protection member (1011), and one side of the protection member (13) is attached to one side of the main body structure (1) away from the electrode assembly (100).

14. An electronic device, which comprises the cell as claimed in any one of claims 8-13.
